Europäisches Patentamt

European Patent Office

Office européen des brevets

(11) Numéro de publication: **0 320 340**
**A1**

## (12) DEMANDE DE BREVET EUROPEEN

(21) Numéro de dépôt: **88403019.8**

(22) Date de dépôt: **30.11.88**

(51) Int. Cl.⁴: **A 01 G 9/00**

(30) Priorité: **09.12.87 FR 8717136**

(43) Date de publication de la demande:
**14.06.89 Bulletin 89/24**

(84) Etats contractants désignés:
**AT BE CH DE ES GB GR IT LI LU NL SE**

(71) Demandeur: **MANUFACTURE VOSGIENNE DE MEUBLES ET SIEGES**
**F-88000 Saint Loup sur Semouse (Vosges) (FR)**

(72) Inventeur: **Orly, Jean-François**
**Pavillon 506, Route de Mazirot**
**Mirecourt (Vosges) (FR)**

(74) Mandataire: **Cabinet Pierre HERRBURGER**
**115, Boulevard Haussmann**
**F-75008 Paris (FR)**

(54) **Meuble jardinière.**

(57) Ce meuble est caractérisé en ce qu'il comporte une paroi inférieure plane (3) portant un bac à fleurs ou à plantes (4) ainsi que des parois latérales (6) essentiellement perpendiculaires à la paroi inférieure (3) et dont la face interne et au moins partiellement recouverte par des miroirs (8).

FIG.1

EP 0 320 340 A1

**Description**

## Meuble jardinière

La présente invention concerne un meuble jardinière.

Les conditions de vie de plus en plus "artificielles", notamment dans les grandes villes, et la rareté toujours accrue des espaces verts, font que nombreux sont ceux qui cherchent à recréer dans leur intérieur un morceau de "nature".

Ce besoin explique les ventes croissantes de plantes vertes et diverses fleurs dites "d'intérieur" qui ne sont pas toujours aisées à acclimater dans les habitations citadines.

Parallèlement à ce développement, on assiste à un intérêt croissant du public pour les plantes miniatures du type "Bonsaï" ou encore les bouteilles ou vases divers contenant des plantes de petites dimensions.

Les divers types de plantes susmentionnés présentent l'inconvénient d'être toujours ajoutés "après coup" dans des pièces sans être réellement intégrées à leur mobilier.

Le but de la présente invention est de proposer un meuble jardinière simple et bon marché, permettant un épanouissement optimal des plantes ou fleurs qu'il contient, tout en faisant partie intégrante de l'ameublement du local dans lequel il est mis en place.

Selon l'invention, ce meuble jardinière est caractérisé en ce qu'il comporte une paroi inférieure plane portant un bac à fleurs ou à plantes ainsi que des parois latérales essentiellement perpendiculaires à la paroi inférieure et dont la face interne est au moins partiellement recouverte par des miroirs.

Un tel meuble peut, conformément à l'invention, être soit posé sur le sol, soit être "suspendu" à une certaine hauteur. Pour que les plantes puissent pousser normalement, il est bien entendu nécessaire qu'elles reçoivent de la lumière, c'est-à-dire que la surface cylindrique entourant la paroi inférieure ne soit pas refermée sur elle-même mais comporte une ouverture suffisante pour laisser passer les rayons lumineux indispensables à la croissance des fleurs ou plantes se trouvant dans le bac ; pour permettre le développement de ces dernières, la présence des miroirs est en fait quasi indispensable étant donné que, par suite des multiples réflexions de lumière qu'ils occasionnent, ceux-ci sont aptes à pallier l'insuffisance d'éclairement qui est souvent le lot des appartements de nos cités et nous empêche de pouvoir garder des plantes saines et vigoureuses.

Selon une autre caractéristique de l'invention, le meuble jardinière est fermé par une porte en un matériau transparent ou translucide.

En plus de son rôle purement esthétique et en tant qu'élément de protection, cette porte qui ferme dans sa totalité l'ouverture susmentionnée de la surface cylindrique, produit à l'intérieur du meuble jardinière un effet de serre qui est très favorable à la croissance des végétaux.

Selon une autre caractéristique de l'invention, l'un des bords latéraux de la porte est monté mobile autour d'un axe vertical solidaire des parois latérales du meuble jardinière tandis que son bord latéral opposé porte des éléments de verrouillage permettant de maintenir la porte adjacente à la paroi latérale dans une position dans laquelle elle forme avec cette dernière une surface cylindrique fermée.

Les éléments de fermeture peuvent, bien entendu, être quelconques sans pour cela sortir du cadre de l'invention ; on peut, à titre d'exemple, opter pour des éléments magnétiques ou encore pour des éléments constitués par un téton notamment monté sur un cavalier fixé à la partie inférieure de la porte et coopérant élastiquement avec une encoche correspondante prévue à cet effet, sur les parois latérales. Selon une autre caractéristique de l'invention, la porte est en un matériau synthétique moulé quelconque ; à titre d'exemple, on peut mentionner une porte en plexiglas (marque déposée) d'une épaisseur de l'ordre de 4 à 6 mm.

Le bac à fleurs ou à plantes peut, bien entendu, lui aussi être en un matériau quelconque sans pour cela sortir du cadre de l'invention ; celui-ci sera choisi en fonction de l'esthétique recherchée ; on choisit souvent là encore un matériau synthétique moulé tel que par exemple du PVC translucide ou transparent.

Selon une variante particulièrement avantageuse de l'invention, le meuble jardinière est destiné à "garnir" l'extrémité d'une rangée de meubles par éléments, notamment de meubles de cuisine suspendus ou encore à combler le vide existant entre deux rangées perpendiculaires de tels meubles.

Conformément à cette variante, le meuble jardinière comporte deux parois latérales de mêmes dimensions et essentiellement perpendiculaires entre-elles, l'une de ces parois latérales devant être fixée à la paroi latérale du meuble "terminal" tandis que l'autre paroi doit être fixée au mur ou encore à la paroi latérale des meubles de la seconde rangée. Bien entendu, dans le cas peu fréquent de deux rangées de meubles par éléments fixées à des murs non perpendiculaires, les deux parois du meuble jardinière ne feront pas un angle de 90° mais un angle correspondant à celui existant entre les deux murs.

Pour des raisons avant tout purement esthétiques, la paroi intérieure du meuble jardinière susmentionné n'est, le plus souvent, pas simplement triangulaire, mais a une forme polygonale, notamment pentagonale ; bien entendu, dans ce cas, la porte est munie d'un nombre de faces correspondant à celles de cette paroi.

En outre, conformément à l'invention, le meuble jardinière est, le plus souvent, fermé par une paroi supérieure, et, comporte des moyens d'éclairage notamment des ampoules ou des tubes au néon, susceptibles, en plus de leur rôle esthétique, de favoriser la croissance des plantes.

Sans qu'il s'agisse là d'une caractéristique limitative de l'invention, on peut, surmonter le meuble jardinière conforme à l'invention, d'une corniche lumineuse similaire à celle décrite dans le brevet n° 87 16 567.

Les caractéristiques du meuble jardinière qui fait l'objet de l'invention seront décrites plus en détail en se référant aux dessins annexés, dans lesquels :

- la figure 1 est une vue en perspective du meuble jardinière,

- la figure 2 est une représentation "éclatée" de ce meuble jardinière.

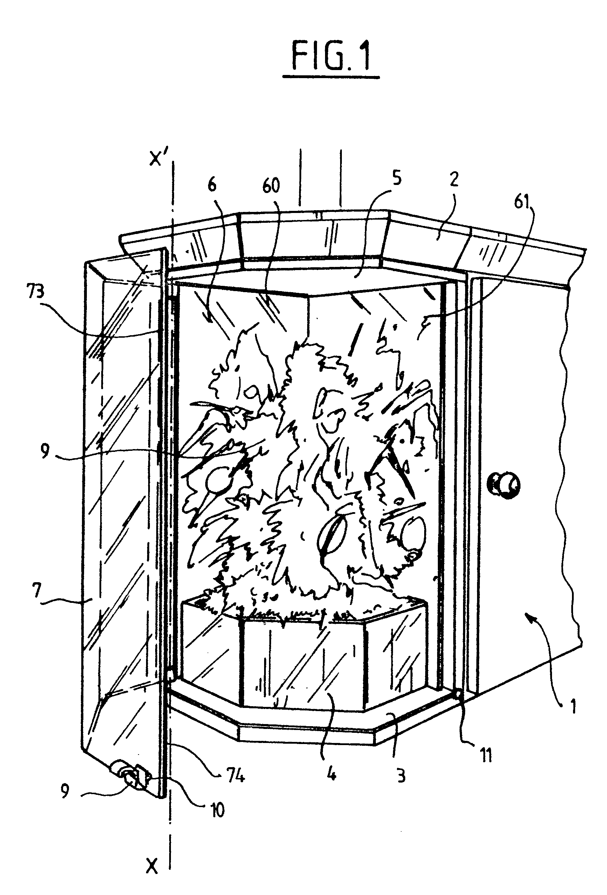

Le meuble jardinière représenté sur la figure 1 est disposé à l'extrémité d'une rangée 1 de meubles de cuisine suspendu et est surmonté par une corniche lumineuse 2 telle que décrite dans le brevet n° 87 16 567 ; bien entendu, il s'agit là d'un exemple de réalisation de l'invention qui ne doit nullement être considéré comme étant limitatif de celle-ci.

Le meuble jardinière qui a des dimensions correspondant à celles des meubles 1 pour pouvoir s'intégrer à l'ensemble de ceux-ci est, schématiquement, constitué par une paroi inférieure horizontale 3 portant un bac à fleurs 4 en un matériau transparent qui occupe la majeure partie de sa surface, par une paroi supérieure 5 similaire à la paroi inférieure 3 et par des parois latérales verticales 6 qui relient les parties 3 et 5 tout en laissant libre une ouverture frontale qui peut être obturée au moyen d'une porte transparente en un matériau synthétique moulé 7.

Les parois 3, 5, 6 peuvent être en un matériau quelconque correspondant à celui des meubles de cuisine, par exemple en un aggloméré recouvert ou non d'un papier décoratif.

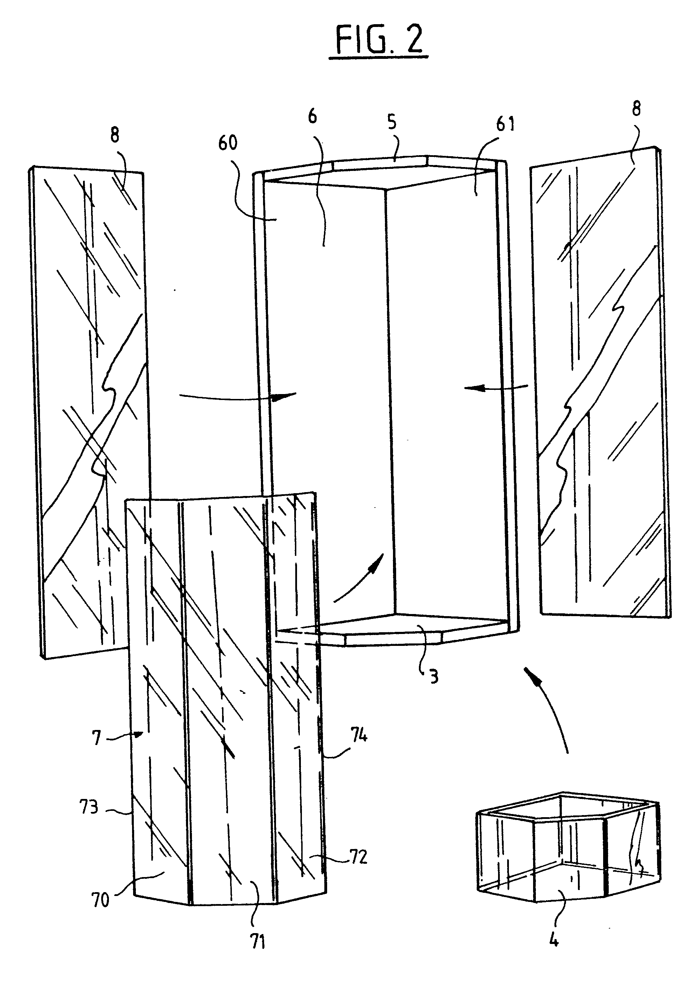

Selon la figure 2, les parois latérales 6 du meuble jardinière se composent de deux parois perpendiculaires de mêmes dimensions 60 et 61 dont les faces internes sont recouvertes par des miroirs 8 permettant de réfléchir la lumière et, par suite, d'améliorer dans une large mesure l'éclairement de la plante ou des fleurs 9 qui sont cultivées dans le bac 4.

Pour des raisons purement esthétiques, les parois inférieure 3 et supérieure 5 sont de forme pentagonale et coopèrent par suite avec une porte 7 qui comporte trois faces 70, 71 et 72 afin de s'adapter parfaitement aux parois 3 et 5 et définir avec les parois latérales 3 une surface cylindrique fermée autour de celles-ci.

Selon la figure 1, l'un des bords latéraux 73 de la porte 7 est monté mobile en rotation autour d'un axe vertical x-x' solidaire de la paroi latérale 60 tandis que le bord opposé 72 porte à sa partie inférieure un cavalier 9 muni d'un téton 10 qui coopère élastiquement avec une encoche correspondante 11 prévue dans la paroi 61 afin de verrouiller l'ensemble en position fermée.

par des miroirs (8).

2°) Meuble jardinière selon la revendication 1, caractérisé en ce qu'il est fermé par une porte (7) en un matériau transparent ou translucide.

3°) Meuble jardinière selon la revendication 2, caractérisé en ce que la porte (7) est en un matériau synthétique moulé.

4°) Meuble jardinière selon l'une quelconque des revendications 1 à 3, caractérisé en ce que le bac à fleurs ou à plantes (4) est en un matériau synthétique moulé, notamment translucide ou transparent.

5°) Meuble jardinière selon l'une quelconque des revendications 1 à 4, caractérisé en ce qu'il comporte deux parois latérales (60, 61) de mêmes dimensions et essentiellement perpendiculaires entre-elles.

6°) Meuble jardinière selon l'une quelconque des revendications 1 à 5, caractérisé en ce qu'il est fermé par une paroi supérieure (5).

7°) Meuble jardinière selon l'une quelconque des revendications 5 et 6, caractérisé en ce que la paroi inférieure (3) et, le cas échéant, la paroi supérieure (5) ont une forme pentagonale.

8°) Meuble jardinière selon l'une quelconque des revendications 2 à 7, caractérisé en ce que l'un des bords latéraux (73) de la porte (7) est monté mobile autour d'un axe vertical (x-x') solidaire de l'une des parois latérales (60) ou première paroi latérale tandis que le bord latéral opposé (74) porte des éléments de verrouillage (9, 10) permettant de le main tenir adjacent à l'autre paroi latérale (61) ou seconde paroi latérale.

9°) Meuble jardinière selon la revendication 8, caractérisé en ce que les éléments de verrouillage sont constitués par un téton (9) notamment monté sur un cavalier (10) fixé à la partie inférieure de la porte (7) et coopérant élastiquement avec une encoche (11) correspondante prévue à cet effet, à l'extrémité inférieure de la seconde paroi latérale (61).

10°) Meuble jardinière selon l'une quelconque des revendications 1 à 9, caractérisé en ce qu'il comporte des moyens d'éclairage (2).

**Revendications**

1°) Meuble jardinière caractérisé en ce qu'il comporte une paroi inférieure plane (3) portant un bac à fleurs ou à plantes (4) ainsi que des parois latérales (6) essentiellement perpendiculaires à la paroi inférieure (3) et dont la face interne et au moins partiellement recouverte

# FIG.1

# FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4543744 (ROYSTER)<br>* colonne 2, ligne 50 - colonne 3, ligne 22; figure 1 *<br>--- | 1-4, 6, 8, 10 | A01G9/00 |
| Y | AT-B-356331 (FLÜGEL)<br>* page 2, ligne 33 - ligne 35 *<br>* page 2, ligne 42 - ligne 53 *<br>--- | 1, 2, 6, 8, 10 | |
| Y | FR-A-1232248 (GERMINEX)<br>* page 2, colonne de gauche, dernier alinéa - page 2, colonne de droite, alinéa 3; figure 1 *<br>--- | 3 | |
| Y | US-A-4249341 (HUEGLI)<br>* colonne 1, ligne 52 - ligne 65; figure 1 *<br>--- | 4 | |
| A | DE-A-3016493 (BREVETEAM)<br>* page 12, ligne 14 - ligne 19 *<br>----- | 4 | |

DOMAINES TECHNIQUES
RECHERCHES (Int. Cl.4)

A01G
A47F

Le présent rapport a été établi pour toutes les revendications

| Lieu de la recherche | Date d'achèvement de la recherche | Examinateur |
|---|---|---|
| LA HAYE | 14 MARS 1989 | HERYGERS J.J. |